# EUROPEAN PATENT APPLICATION

(11) **EP 4 539 312 A1**
(43) Date of publication of application: **16.04.2025**
(21) Application number: 23202972.8
(22) Date of filing: 11.10.2023
(51) Int. Cl.: H02K 16/00, H02K 7/00, H02K 11/042, H02K 19/12, H01F 38/18, B60K 1/02

(54) **A DUAL EXCITATION ARRANGEMENT**

(71) Applicant: Polestar Performance AB, 405 31 Gothenburg (SE)
(72) Inventor: RODÉN, Marcus, 432 96 Åskloster (SE); EHN, Joakim, 461 98 Trollhättan (SE)
(74) Representative: Zacco Sweden AB

(57) **Abstract**

The present disclosure relates to a dual excitation arrangement (1) arranged to provide power to a first and a second electrically excited rotor (100a, 100b), the dual excitation arrangement (1) comprising a transmitting device (10) comprising, a first side portion (10a), a second side portion (10c) and a centre portion (10b). Further, the dual excitation arrangement (1) comprises a first power receiving device (12a) adjacent said first side portion (10a) and a second power receiving device (12b) adjacent said second side portion (10b). The dual excitation arrangement (1) is arranged to receive, in said transmitting device (10), AC power from said power source and contactless transmit a first part of said AC power to said first power receiving device (12a) for powering the first rotor (100a); and contactless transmit a second part of said AC power to said second power receiving device (12b) for powering the second rotor (100b).

## Description

### TECHNICAL FIELD

The present disclosure relates to a dual excitation arrangement arranged to provide power to a first and a second electrically exciter rotor. Further, the disclosure relates to a dual excited rotor arrangement comprising such a dual excitation arrangement and a vehicle comprising the dual excited rotor arrangement.

### BACKGROUND

Electric vehicles have gained popularity in recent years due to their environmental benefits and the progression in battery technology which have extended the range of electric vehicles while also reduced charging times thereof.

Electric vehicles may have different motor configurations and may be driven by for example one or more electric motors.

Dual electric motors in electric vehicles offer several advantages. For example, they enhance performance by providing independent wheel drive capabilities thereby improving traction and handling in various environmental conditions. Further, dual electric motors can enable customizable torque distribution between the front and rear axles of the vehicle, thereby optimizing performance for different driving scenarios.

A dual electric motor may have different types of electric motors. One type is an electrically excited electric motor which comprise a stator and a rotor, in which the rotor comprises windings around the rotor core. Such an electric motor provide the advantage of being more environmental friendly compared to electrical machines utilizing rotors with permanent magnets as permanent magnets involve mining and refining of rare elements in their production.

Accordingly, there would be several advantages of having a dual electric motor in which the electric motors comprise electrically excited rotors. However, currently such dual electric motors are bulky and challenging to control as the excitation arrangements which provide power to the rotor windings of such dual electric motors are bulky in design and in need of an excess amount of electrical components.

Based on the above, there is room for an excitation arrangement that can provide power to a first and a second electrically excited rotor that is more compact and/or utilizes less components compared to excitation arrangements of the present art.

Thus, even though previous solutions may work in some situations, it would be desirable to provide an excitation arrangement arranged to provide power to a first and a second electrically excited rotor that is compact and/or utilizes a low amount of electrical components.

### SUMMARY

It is therefore an object of the present disclosure to alleviate at least some of the mentioned drawbacks to provide an improved excitation arrangement that is more compact and/or utilizes less components.

This and other objects, which will become apparent in the following, are achieved by a dual excitation arrangement, a dual rotor arrangement comprising such an excitation arrangement and a dual electric motor comprising such a rotor arrangement.

The present disclosure relates to a dual excitation arrangement arranged to provide power to a first and a second electrically excited rotor. The dual excitation arrangement comprises a transmitting device comprising, a first side portion, a second side portion and a center portion intermediate said first and said second side portion. Further, the dual excitation arrangement comprises a first power receiving device adjacent said first side portion and a second power receiving device adjacent said second side portion. Moreover, the dual excitation arrangement is arranged to receive/obtain, in said transmitting device, alternating current, AC, power from said power source and contactless transmit a first part of said AC power to said first power receiving device for powering the first rotor. Moreover, the dual excitation arrangement is arranged to contactless transmit a second part of said AC power to said second power receiving device for powering the second rotor. In other words, contactless transmitting the first part of said AC power to said first power receiving device for electrically exciting the windings of the first rotor and a second part of said AC power to said second power receiving device for electrically exciting the windings of the second rotor.

Advantageously, the dual excitation arrangement can obtain AC power from a single power source (e.g. a battery pack) and transmit the AC power to a pair of power receiving devices. Accordingly, a single transmitting device is enabled to feed two power receiving devices. Thereby, having a compact dual excitation arrangement with few electrical components.

The first power receiving device may be arranged to be attached to an interior surface of a first shaft of said first rotor, wherein the second power receiving device may be arranged to be attached to an interior surface of a second shaft of said second rotor to radially enclose the same. Accordingly, the power receiving devices may be arranged to be attached to hollow rotor shafts such that they rotate with the rotor shaft. Hence, the transmitting device may be arranged to be stationary relative the rotor shafts so that it is a stationary transmitting device.

An advantage of this is that it provides further compactness as at least a part of the dual excitation arrangement can be inside the first and the second rotors.

The transmitting device may comprise control circuitry configured to split said received AC power into said first and said second part. In some aspects herein, the control circuitry may be connected to/comprise a shunt/parallel circuit arranged to split the received AC power. Accordingly, the parallel circuit may comprise two power transferring lines, one being connected to the first side portion of the transmitting device and the other to a second side portion of the transmitting device. Each power transferring line may comprise a return path. Accordingly, each power transferring line may be a pair of lines. Accordingly, each side portion of the transmitting device may comprise/be defined by a magnetic material such as iron, steel, ferrite or any other suitable material. Moreover, each side portion may comprise a wound wire (e.g. copper) coupled to a corresponding (shunt) power transferring line. In some aspects, the center portion may also comprise said magnetic material.

An advantage of this is that the received AC power, by few components, can be split in two equal parts.

The control circuitry may comprise a single power stage. In other words, controlling and powering the windings of both rotors may be performed in a single stage/section. Accordingly, the control circuitry may comprise components related to power regulation, power amplification, power sensing and switching, wherein said AC power is outputted based on operations performed (in a single stage) by said components. The AC power may further, as previously disclosed herein, partitioned into the first and the second part. In other words, the AC power may be outputted based on operations performed in a single stage.

The control circuitry may coupled to the excitation arrangement. In some aspects, the control circuitry is connected to a mechanical structure of the excitation arrangement. In other aspects, the control circuitry is connected to the transmitting device by that the control circuitry comprises parallel output lines (also referred to as power transferring lines) arranged to split AC power, the parallel output lines being connected to a respective side portion of the transmitting device for transferring AC power to each side portion. Thus, each rotor will be equally powered as the power is split into equal parts by said parallel lines. Therefore, the control circuitry may be configured to prepare an amount of power (in a single stage) for both rotors as the power may be split/dividedly shared by two rotors.

Contactless transmit of said first and second part of AC power may comprise to inductively transmit said first and second part of AC power.

Moreover, in some aspects herein, the first power receiving device comprises a first rectifier circuitry, the second power receiving device comprises a second rectifier circuitry, wherein each rectifier circuitry is configured to rectify, AC power to, direct current, DC power and further transmit said DC power to windings of a corresponding rotor of said first and second rotor. Each rectifier circuitry may comprise a substrate in which electronic components (such as diodes, capacitors, resistors and any other rectifier component) thereof are attached to. The substrate may be a printed circuit board.

Moreover, each power receiving device may comprise a busbar arrangement arranged to connect to corresponding windings of said first and second rotor for transmitting said DC power thereto.

Further, said first side portion of said transmitting device may be arranged to be enclosed by said first rotor, wherein said second side portion of said transmitting device may be arranged to be enclosed by said second rotor.

An advantage of this is that it provides additional compactness as parts of the transmitting device can be enclosed by respective rotor.

In some aspects, the first side portion of said transmitting device is enclosed by said first power receiving device, and said second side portion of said transmitting device is enclosed by said second power receiving device for enabling contactless power transfer. In aspects in which said contactless power transfer is inductive power transfer, the first power receiving device may comprise a first receiving coil arrangement) and the second power receiving device may comprise a second power receiving coil arrangement. Hence, the first side portion may comprise a first transmitting coil arrangement and the second side portion may comprise a second transmitting coil arrangement. Thereby, the AC power can be transmitted contactless from first side portion of the transmitting device to the first power receiving device and from the second side portion of the transmitting device to the second power receiving device. The first transmitting coil arrangement and the first power receiving coil arrangement may be arranged coaxially. Accordingly, the second transmitting coil arrangement and the second receiving coil arrangement may also be arranged coaxially.

The transmitting device may comprise an attachment frame connected to said center portion, the attachment frame being arranged be connected by bearings, to a first shaft of said first rotor and a second shaft of said second rotor, thereby allowing the first and the second rotor to rotate relative the transmitting device. Thereby, an efficient and compact structure is realized.

The attachment frame may be connected by bearings to interior surfaces of said shafts or to exterior surfaces of said shafts. An advantage of being connected to interior surface of said shafts is that the bearings will be embedded in the shafts and thereby increase space efficiency.

The transmitting device may at said center portion comprise a fluid inlet connected to a fluid channel, the fluid channel comprising a first branch extending out from said first side portion, and a second branch extending out from said second side portion, wherein the fluid inlet is arranged to receive cooling medium.

An advantage of this is that a single inlet can provide cooling medium to two rotor shafts. Accordingly, the branches may be arranged to direct said fluid to the first and second rotor interior.

The present disclosure further discloses a dual rotor arrangement for a dual electric motor comprising a first rotor comprising a first rotor shaft enclosed by a first rotor core comprising first rotor windings around said first core and a second rotor comprising a second rotor shaft enclosed by a second rotor core comprising second rotor windings around said second core. Further, the dual rotor arrangement comprises the dual excitation arrangement according to any aspect herein. The dual excitation arrangement is configured to provide power to said first and second rotor to electrically excite the windings of each rotor to simulate/create a permanent magnetic field arranged to interact with a first and a second stator that encloses corresponding rotors of said first and second rotor. Thereby, the first and second rotor are able to rotate relative the stators. Accordingly, the rotors may be connected to respective output shafts for powering a respective wheel of a vehicle (e.g. a left and right wheel).

The first and second rotor may be coaxially arranged so to have a common axial extension. The dual excitation arrangement may be at least partially positioned within said first and second rotor shafts. As noted herein, the excitation arrangement may be an integral structure.

The first rotor shaft may comprise a first centre axis and the second rotor shaft may comprise a second centre axis, wherein the first and second centre axis are coaxial, wherein the transmitting device of said dual excitation arrangement is positioned intermediate said first and second rotor. Accordingly, the centre portion of the transmitting device may be positioned intermediate the first and second rotor, wherein side portions thereof may be enclosed by a corresponding rotor shaft of the first and the second rotor shaft. Thereby allowing the transmitting device to receive AC power from a single power stage, which is then partitioned to be supplied contactless to the first and the second power receiving devices.

It should be noted that any feature that in context of the dual excitation arrangement is disclosed as "arranged to" may for the dual rotor arrangement be comprised in the dual rotor arrangement.

The present disclosure further relates to a dual electric motor comprising the dual rotor arrangement according to any aspect herein. Further, the dual electric motor comprises a first stator enclosing said first rotor and a second stator enclosing said second rotor.

Further, the present disclosure relates to an electric vehicle comprising the aforementioned dual electric motor.

### BRIEF DESCRIPTION OF THE DRAWINGS

These and other features and advantages of the present disclosure will now be further clarified and described in more detail, with reference to the appended drawings;
- Figure 1: schematically illustrates a cross-sectional side view of a dual excitation arrangement in accordance with some aspects of the present disclosure;
- Figure 2: schematically illustrates a cross-sectional side view of a dual excitation arrangement in accordance with some aspects of the present disclosure;
- Figure 3: illustrates a side objective view of a part of the dual excitation arrangement in accordance with aspects of the present disclosure;
- Figure 4: illustrates a side view of a dual rotor arrangement comprising a first and a second rotor in accordance with some aspects of the present disclosure; and
- Figure 5: illustrates a top schematic view of an electric vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "hollow rotor shaft" may refer to that the rotor shaft comprises a void/space at the interior of the rotor shaft. The rotor shaft may at one end be connected to an output shaft of an EV.

The term "rotor" herein may refer to an electrically excited rotor. An electrically excited rotor being a rotor that is magnetized by an external electrical source. Preferably, DC power received from a rectifier circuitry.

The term "busbar" herein may refer to a rigid conductor, e.g. a metallic bar, arranged to carry electric power. The busbar may be formed by e.g. copper.

The terms "transmitting device" and "receiving device" may jointly refer to an arrangement arranged to transmit DC power to a rotor winding. In some aspects these components may refer to a transformer arrangement arranged to contactless/inductively receive AC power from battery modules of an electric vehicle, rectify said AC power to DC power in a rectifying circuitry of the receiving device and transfer said DC power to said rotor winding.

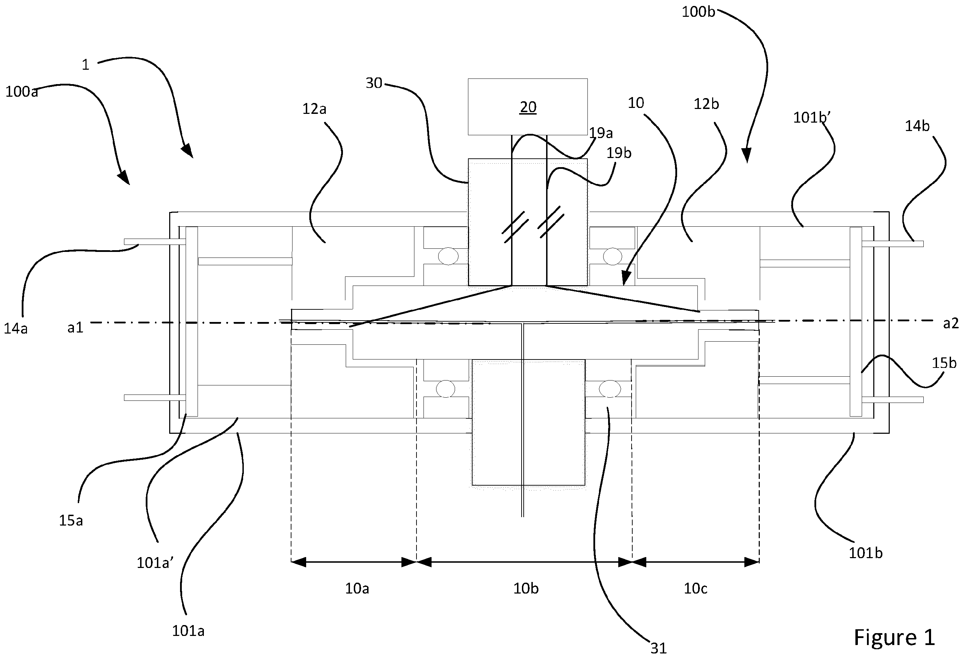

Figure 1 illustrates schematically side cross-sectional view of a dual excitation arrangement 1 arranged to provide power to a first and a second electrically excited rotor 100a, 100b. It should be noted that Figure 1 only illustrates the shafts 101a, 101b of the rotors. The dual excitation arrangement 1 comprising a transmitting device 10 comprising a first side portion 10a, a second side portion 10c and a centre portion 10b intermediate said first and said second side portion 10a, 10c. Further, Figure 1 illustrates that the dual excitation arrangement 1 comprises a first power receiving device 12a adjacent said first side portion 10a and a second power receiving device 12b adjacent said second side portion 10b. Further, the dual excitation arrangement 1 is arranged to receive, in said transmitting device 10, AC power from said power source and contactless transmit a first part of said AC power to said first power receiving device 12a for powering the first rotor 100a, i.e. for supplying DC power to the windings (not shown in Figure 1 which only illustrates the (annular) rotor shaft 101a of the first rotor 100a). Further, the arrangement 1 is arranged to contactless transmit a second part of said AC power to said second power receiving device 12b for powering the second rotor 100b.

As illustrated in Figure 1, the transmitting device 10 may be an integral structure. However, in other aspects it may be two (coupled or uncoupled) units. Further, Figure 1 illustrates that the first power receiving device 12a may be attached to an interior surface 101a' of a first shaft 101a of said first rotor 100a, wherein the second power receiving device 12b may be attached to an interior surface 101b' of a second shaft 100b of said second rotor 101b. Accordingly, the power receiving devices 12a, 12b may be arranged to rotate with the rotors 100a, 100b. Thus, the transmitting device 10 is stationary such that it is static and can therefore be attached to a structural part of the vehicle. The side portions 10a, 10c of the transmitting device 10 may be annular. Additionally, the power receiving devices 12a, 12b may also be annular, at least at a portion thereof arranged to interact with said transmitting device 10.

Figure 1 illustrates that the transmitting device 10 may be a single transmitting device 10 that partition/divides AC power to supply a first part to the power receiving device 12a and a second part to the power receiving device 12b. Accordingly, the transmitting device 10 herein may be referred to as a single-powered transmitting device. The transmitting device 10 may, at side portions 10a, 10c have respective coils wound around e.g. a ferrite containing core material. The coils creating a magnetic field. The coils may be referred to as primary coils. Thus, each power receiving device 12a, 12b may have secondary coils. Accordingly, the alternating magnetic field produced by the primary coils induces a changing magnetic field in the core material and, consequently, in the secondary coils. According to Faraday's law of electromagnetic induction, this may induce an electromotive force (EMF), or voltage, in the coil. The induced voltage in the secondary coil may follow the same frequency as the AC source in the primary coil. It should be noted that the coils may be oriented/wound in different manners for providing e.g. radial power transfer (perpendicular to axis a1, a2).

Figure 1 further illustrates that the transmitting device 10 may comprise control circuitry 20 configured to split said received AC power into said first and said second part. As illustrated in Figure 1, the received AC power may be split by a parallel/shunt connection. Accordingly, Figure 1 illustrates that the control circuitry 20 can split, by parallel transferring lines 19a, 19b AC power into two parts. The control circuitry 20 may be arranged to receive the power from a battery pack (not shown) of the vehicle. The battery pack may be formed by a plurality of battery modules electrically coupled together. The modules may comprise a plurality of individual battery cells grouped into distinct clusters. In addition to the battery modules, a variety of other components can be packed into the pack. These components can include electrical current transmission systems, safety systems, battery management systems, and current management systems. An electrically conductive battery bus bar, typically comprised of a copper wire and strips, interconnects the various components and enables power distribution within the battery pack.

It should be noted that the control circuitry 20 may comprise an inverter configured to convert DC power received from the power source into AC power. Further, the control circuitry 20 of Figure 1 may comprise a DC-DC converter. Further, the control circuitry 20 may comprise any other suitable component for enabling the transformer to receive AC power. Components such as high-voltage cabling and connectors. Further, the control circuitry 20 may comprise, for example, one or more central processing units (CPUs), graphics processing units (GPUs) dedicated to performing calculations, and/or other processing devices. Furthermore, the control circuitry 20 may comprise one or more memory devices. The memory devices may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the control circuitry 20.

The contactless transmit of said first and second part of AC power may comprise to transmit the first and the second part inductively. According, referring to Figure 1 again, there is no contact between the transmitting device 10 and the power receiving devices 12a, 12c. Therefore, the power receiving devices 12a, 12b, each is preferably mounted to corresponding rotor shaft 101a, 101b so to rotate with the rotor shafts 101a, 101b.

Figure 1 further illustrates that the first power receiving device 13a may comprise a first rectifier circuitry 15a, the second power receiving device 13b comprises a second rectifier circuitry 15b. Each rectifier circuitry 15a, 15b may be configured to rectify, AC power to DC power and transmit said DC power to windings of a corresponding rotor 101a, 101b of said first and second rotor 101a, 101b.

Figure 1 further illustrates that each power receiving device 12a, 12b may comprise a busbar arrangement 14a, 14b arranged to connect to corresponding windings 102a, 102b of said first and second rotor 100a, 100b for transmitting said DC power thereto. Accordingly, an excitation operation may be performed by that each power receiving device 12a, 12b receives AC power from a corresponding transferring line 19a, 19b. Each transferring line 19a, 19b may be connected to a common node that enables splitting of AC power into equal parts. Further, the transmitting device 10 contactless transmits the AC power to the power receiving devices 12a, 12b. Subsequently, the power receiving devices 12a, 12b may transfer the AC power by a first part of the busbar arrangement 14a, 14b to each rectifier circuitry 15a, 15b. Then, each rectifier circuitry may rectify/convert the AC power to DC power and by a second part of the busbar arrangement 14a, 14b transmit the DC power to the windings of each rotor 101a, 101b. The rectifier circuitries 15a, 15b may each comprise "+" and "-" terminals a corresponding busbar of the arrangement being connected between each terminal and the rotor winding.

Figure 1 further illustrates that the first side portion 10a of said transmitting device 10 may be arranged to be enclosed by said first rotor 100a, wherein said second side portion 10c of said transmitting device 10 is arranged to be enclosed by said second rotor 100b. Accordingly, the first rotor shaft 101a may (radially) enclose said first side portion 10a and the second rotor shaft 101b may (radially) enclose/surround/encircle/form a barrier around said second side portion 10b. Accordingly, as further shown in Figure 1, the first side portion 10a of said transmitting device 10 may be enclosed (but not in contact with) by said first power receiving device 12a, and said second side portion 10c of said transmitting device 10 may be enclosed by said second power receiving device 12b for enabling contactless power transfer. In other words, the first side portion 10a and the first power receiving device 12a may be arranged coaxially. Therefore, the second side portion 10a and the second power receiving device 12b may also be arranged coaxially. Accordingly, the AC power may be transferred/transmitted from the transmitting device 10 to corresponding power receiving device 12a, 12b radially, however it may also be transferred axially, or axially and/or radially.

Figure 1 further illustrates that the transmitting device 10 may comprise an attachment frame 30 connected to said centre portion 10b, the attachment frame 30 being arranged to be connected by bearings 31, to a first shaft 101a of said first rotor 100a and a second shaft 101b of said second rotor 100b, thereby allowing the first and the second rotor 100a, 100b to rotate relative the transmitting device 10. As illustrated in Figure 1, the attachment frame 30 may be intermediate two rotors 100a, 100b. The bearings 31 may be any suitable type of bearings such as ball bearings. The bearings 31 may be arranged to rotatably connect the rotors 100a, 100b relative the transmitting device 10 and the attachment frame 30. Therefore, the attachment frame 30 and the transmitting device 10 may be fixedly connected to each other. The attachment frame 30 may be arranged to be connected to a structural component of the vehicle by a suitable fastening element (e.g. screws, bolts or adhesive).

In Figure 1, the attachment frame 30 is connected by said bearings 31 to interior surface 101a', 101b' of said shafts 101a, 101b. The bearings 31 may be two bearings, each circumferentially attached to annular interior surfaces 101a', 101b' of the shaft 101a, 101b.

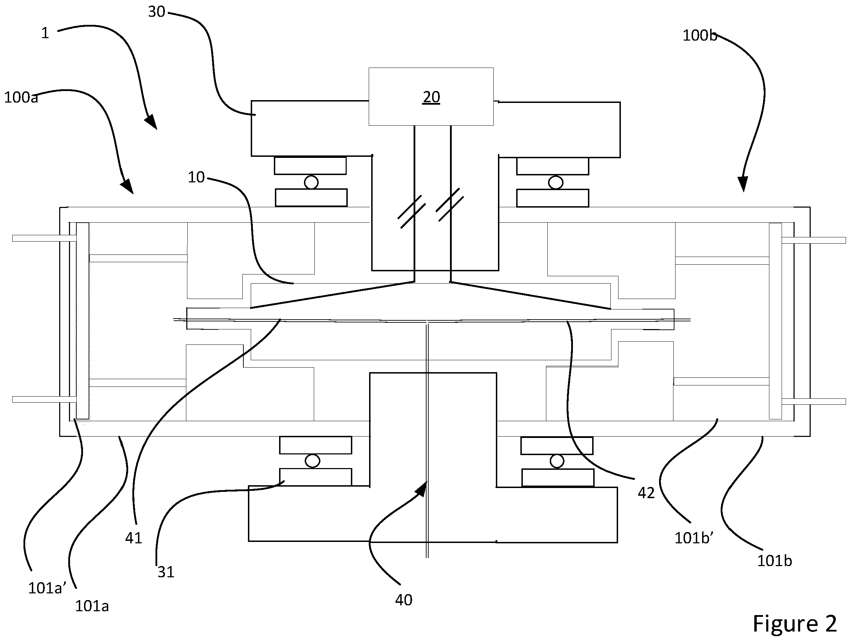

However, in Figure 2, which schematically discloses cross-sectional side-view of a dual excitation arrangement 1, the attachment frame 30 is connected by said bearings 31 to exterior surfaces 101a, 101b.

Figure 2 further illustrates that the dual excitation arrangement 1 may comprise at said centre portion 10b, a fluid inlet connected to a fluid channel 40, the fluid channel comprising a first branch 41, and a second branch 42, wherein the fluid inlet is arranged to receive cooling medium. Thereby, the cooling medium can be outputted towards the rectifier circuitries from respective branch 41, 42. Specifically, the transmitting device 10 in Figure 1 comprises said fluid channel 40. The control circuitry 20 as shown in Figure 1 may be configured to control a fluid injector arranged to provide fluid to said fluid channel.

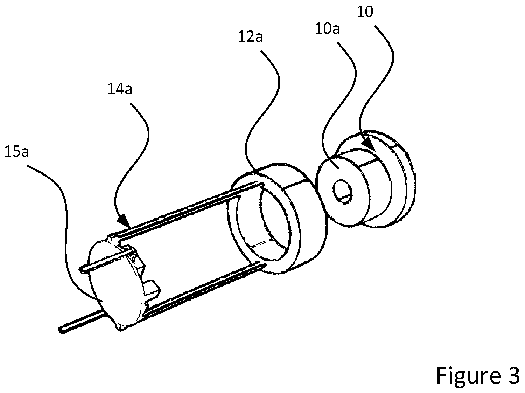

Figure 3 illustrates an objective exploded view of a part of the dual excitation device 1 that discloses a side portion 10a of the transmitting device 10, the first power receiving device 12a, the busbar arrangement 14a and the first rectifier circuitry 15a. Figure 3 is an exemplary illustration of the aforementioned components. The rectifier circuitry 15a, the side portion 10a of the transmitting device 10 and the first power receiving device 12a may all be enclosed radially by the first rotor shaft 101a (as shown in Figure 1). Accordingly, the side portion 10c may comprise the same components as the side portion 10a disclosed in Figure 3.

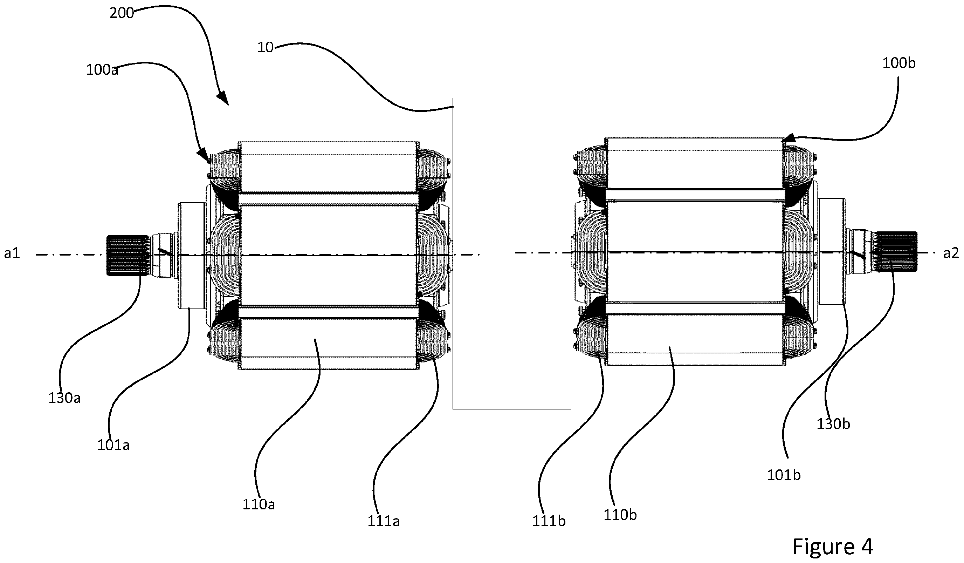

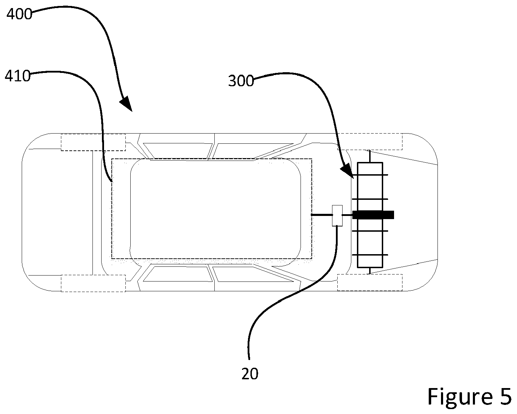

Figure 4 illustrates a side view of a dual rotor arrangement 200 for a dual electric motor 210 (shown in Figure 5) comprising a first rotor 100a comprising a first rotor shaft 101a enclosed by a first (annular) rotor core 110a (formed by e.g. iron) comprising first rotor windings 111a. Further, the dual rotor arrangement 200 comprises a second rotor shaft 101b enclosed by a second rotor core 110b comprising second rotor windings 111b. In other words, each rotor shaft 101a, 101b is enclosed by a rotor core 110a, 110b that comprises windings 111a, 111b circumferentially distributed about the circumference of said core as illustrated in Figure 4. The term winding may be interchanged with "rotor winding" or "winding structure". The windings may be any suitable type of windings formed by e.g. hairpin conductors or any other suitable type of conductors. Further, each winding 111a, 111b may be electrically connected to the busbar arrangement 14a, 14b as illustrated in Figure 1 so that the busbar arrangement 14a, 14b can power the windings 111a, 111b to allow the rotors 100a, 100b to be electrically excited by DC power. Hence, parts of respective busbar arrangement 14a, 14b may protrude out from the rotor shafts 101a, 101b. Moreover, Figure 4 illustrates that the dual rotor arrangement 200 comprises the dual excitation arrangement 1 according to any aspect herein. The dual excitation arrangement 1 is configured to provide power to said first and second rotor 100a, 100b and interact with a respective stator to power propulsion of an electric vehicle.

Figure 4 further illustrate that the rotors 100a, 100b each comprises an output shaft 130a, 130b. Accordingly, the rotation of each rotor 100a, 100b may be utilized to rotate the wheels of the vehicle. Figure 4 further illustrates that the first rotor shaft 101a may comprises a first centre axis a1 and the second rotor shaft 101b may comprise a second centre axis a2. Accordingly, in Figure 4, the first and second centre axis a1, a2 are coaxial, wherein the transmitting device 10 of said dual excitation arrangement 1 is positioned intermediate said first and second rotor 100a, 100b. In other words, the axis a1, a2 may intersect the transmitting device 10. The power receiving devices are not visible in Figure 4 as they are located at an interior of the rotor shafts 101a, 101b.

Figure 5 schematically illustrates a top view of an electric vehicle 400 comprising a dual electric motor 300 comprising the dual rotor arrangement 200 according to any aspect herein and a first stator (not shown) enclosing/accomodating said first rotor 100a and a second stator (not shown) enclosing/accomodating said second rotor 100b. The electric vehicle 400 comprises a battery pack 410 a number of other electrical components, including an electrical current transmission system, safety system, battery management system, current management system, and a battery busbar interconnecting the various components. Further, the electric vehicle 400 may comprise an electronic control unit (ECU) in order to control the dual electric motor 300. The ECU (which may be integrated or communicating with said control circuitry 20) or components thereof can comprise or include various modules, each of which is constructed, programmed, configured, or otherwise adapted to autonomously carry out a function or set of functions. The first and second stators may be any suitable type of stators comprising an annular core that comprises stator windings distributed circumferentially about the annular core. Each stator enclosing the rotor. Further, each stator may have any suitable number of stator poles and phases. Each stator being arranged to receive AC power. The stator may be connected to the control circuitry 20 or to any other control circuitry of the electric vehicle.

## Claims

1. A dual excitation arrangement (1) arranged to provide power to a first and a second electrically excited rotor (100a, 100b), the dual excitation arrangement (1) comprising:
- a transmitting device (10) comprising, a first side portion (10a), a second side portion (10c) and a centre portion (10b) intermediate said first and said second side portion (10a, 10c);
- a first power receiving device (12a) adjacent said first side portion (10a);
- a second power receiving device (12b) adjacent said second side portion (10b);
wherein the dual excitation arrangement (1) is arranged to:
- receive, in said transmitting device (10), AC power from said power source;
- contactless transmit a first part of said AC power to said first power receiving device (12a) for powering the first rotor (100a);
- contactless transmit a second part of said AC power to said second power receiving device (12b) for powering the second rotor (100b).

2. The dual excitation arrangement (1) according to claim 1, wherein the first power receiving device (12a) is arranged to be attached to an interior surface (101a') of a first shaft (101a) of said first rotor (100a), wherein the second power receiving device (12b) is arranged to be attached to an interior surface (101b') of a second shaft (100b) of said second rotor (101b).

3. The dual excitation arrangement (1) according to any one of the claims 1 or 2, wherein the transmitting device (10) comprises control circuitry (20) configured to:
- split said received AC power into said first and said second part.

4. The dual excitation arrangement (1) according to any one of the preceding claims, wherein said contactless transmit of said first and second part of AC power comprises to inductively transmit said first and second part of AC power.

5. The dual excitation arrangement (1) according to any one of the preceding claims, wherein the first power receiving device (12a) comprises a first rectifier circuitry (15a), the second power receiving device (12b) comprises a second rectifier circuitry (15b), wherein each rectifier circuitry (15a, 15b) is configured to:
- rectify, AC power to DC power;
- transmit said DC power to windings of a corresponding rotor of said first and second rotor (101a, 101b).

6. The dual excitation arrangement (1) according to claim 5, wherein the each power receiving device (12a, 12b) comprises a busbar arrangement (14a, 14b) arranged to connect to corresponding windings (102a, 102b) of said first and second rotor (100a, 100b) for transmitting said DC power thereto.

7. The dual excitation arrangement (1) according to any one of the preceding claims, wherein said first side portion (10a) of said transmitting device (10) is arranged to be enclosed by said first rotor (100a), wherein said second side portion (10c) of said transmitting device (10) is arranged to be enclosed by said second rotor (100b).

8. The dual excitation arrangement (1) according to claim 7, wherein the first side portion (10a) of said transmitting device (10) is enclosed by said first power receiving device (12a), and said second side portion (10c) of said transmitting device (10) is enclosed by said second power receiving device (12b) for enabling contactless power transfer.

9. The dual excitation arrangement (1) according to any one of the preceding claims, wherein the transmitting device (10) comprises an attachment frame (30) connected to said centre portion (10b), the attachment frame (30) being arranged to be connected by bearings (31), to a first shaft (101a) of said first rotor (100a) and a second shaft (101b) of said second rotor (100b), thereby allowing the first and the second rotor (100a, 100b) to rotate relative the transmitting device (10).

10. The dual excitation arrangement (1) according to claim 9, wherein the attachment frame (30) is connected by said bearings (31) to interior surfaces (101a', 101b') of said shafts (101a, 101b) or to exterior surfaces of said shafts (101a, 101b).

11. The dual excitation arrangement (1) according to any one of the preceding claims, wherein the transmitting device (10) comprises, at said centre portion (10b), a fluid inlet connected to a fluid channel (40), the fluid channel comprising a first branch (41) extending out from said first side portion (10a), and a second branch (42) extending out from said second side portion (10c), wherein the fluid inlet is arranged to receive cooling medium.

12. A dual rotor arrangement (200) for a dual electric motor (210) comprising:
- a first rotor (100a) comprising a first rotor shaft (101a) enclosed by a first rotor core (110a) comprising first rotor windings (111a);
- a second rotor (100b) comprising a second rotor shaft (101b) enclosed by a second rotor core (110b) comprising second rotor windings (111b);
- the dual excitation arrangement (1) according to any one of the claims 1-11; wherein the dual excitation arrangement (1) is configured to provide power to said first and second rotor.

13. The dual rotor arrangement (200) according to claim 12, wherein the first rotor shaft (101a) comprises a first centre axis (a1), the second rotor shaft (101b) comprises a second centre axis (a2),
wherein the first and second centre axis (a1, a2) are coaxial, wherein the transmitting device (10) of said dual excitation arrangement (1) is positioned intermediate said first and second rotor (100a, 100b).

14. A dual electric motor (300) comprising:
- the dual rotor arrangement (200) according to claim 12 or 13;
- a first stator enclosing said first rotor (100a);
- a second stator enclosing said second rotor (100b).

15. An electric vehicle (400) comprising the dual electric motor (300) according to claim 14.
